(19) Europäisches Patentamt
European Patent Office
Office européen des brevets

(11) **EP 3 827 480 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **19737733.6**

(22) Anmeldetag: **09.07.2019**

(51) Internationale Patentklassifikation (IPC):
*H01R 4/02* (2006.01)   *H01R 4/58* (2006.01)
*H01R 43/02* (2006.01)   *H01R 4/62* (2006.01)

(52) Gemeinsame Patentklassifikation (CPC):
**H01R 4/029; H01R 4/625; H01R 43/0207**

(86) Internationale Anmeldenummer:
**PCT/EP2019/068355**

(87) Internationale Veröffentlichungsnummer:
**WO 2020/020628 (30.01.2020 Gazette 2020/05)**

(54) **ELEKTRISCHE VERBINDUNG SOWIE VERFAHREN ZUR HERSTELLUNG EINER ELEKTRISCHEN VERBINDUNG**

ELECTRIC CONNECTION AND METHOD FOR PRODUCING AN ELECTRIC CONNECTION

LIAISON ÉLECTRIQUE ET PROCÉDÉ POUR ÉTABLIR UNE LIAISON ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2018 DE 102018118124**
**15.08.2018 DE 102018119844**

(43) Veröffentlichungstag der Anmeldung:
**02.06.2021 Patentblatt 2021/22**

(73) Patentinhaber: **Auto-Kabel Management GmbH**
**79688 Hausen i.W. (DE)**

(72) Erfinder: **SCHARKOWSKI, Oliver**
**03172 Schenkendöbern OT Atterwasch (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
WO-A1-2019/149396   DE-A1-102015 106 265
DE-A1-102016 110 628   DE-B3-102016 125 748
DE-T5-112015 000 538   JP-A- 2002 025 740
JP-A- 2016 225 193

**Beschreibung**

Der Gegenstand betrifft eine elektrische Verbindung zwischen einem Flachteil und einem Anschlussteil sowie ein Verfahren zur Herstellung einer solchen elektrischen Verbindung. Die elektrische Verbindung wird insbesondere in automotiven Anwendungen zum Einsatz kommen, insbesondere bei der Verbindung von Flachleitern mit Anschlussteilen, wie beispielsweise Bereiche von Batterieleitungen, welche als Flachkabel ausgeführt sind, Batteriezellenverbindern oder Stromschienen, die unteranderem als Flachleiter ausgebildet sind.

Die elektrische Verbindung von Flachleitern mit Anschlussteilen muss insbesondere in automotiven Anwendungen dauerhaft stabil sein. Darüber hinaus ist ein geringer Übergangswiderstand, insbesondere im Bereich der Energieleiter von Kraftfahrzeugen von Nöten, um die elektrischen Verluste entlang des Übergangs so gering wie möglich zu halten. Dies ist insbesondere im Bereich der Batteriekabel als auch der Batteriezellenverbinder von besonderer Bedeutung.

Darüber hinaus hat sich der Einsatz von Aluminium für elektrische Leiter in Kraftfahrzeugen etabliert. Der Werkstoff Aluminium stellt jedoch die Verbindungstechnik vor neue Herausforderungen, was einerseits den Übergangswiderstand angeht und andererseits die Verbindung mit anderen Metallwerkstoffen. Bei den hohen Anforderungen an die Stromtragfähigkeit kommen meist hohe Leiterquerschnitte zur Anwendung, wodurch auch andere Grundwerkstoffe herausfordernd für die meist stoffschlüssige Verbindungstechnik sind.

DE 10 2016 110628 A1 offenbart eine elektrische Verbindung gemäß dem Oberbegriff von Anspruch 1.

Vor diesem Hintergrund lag dem Gegenstand die Aufgabe zugrunde, eine langzeitstabile elektrische Verbindung zwischen einem Flachteil und einem

Anschlussteil zur Verfügung zu stellen, welche die geforderte langzeitstabile elektrische Verbindung nicht nur mittels Stoffschluss, sondern zusätzlich mittels Formschluss sowie insbesondere auch besonders prozesssicher und/oder wirtschaftlich herstellbar ist.

Diese Aufgabe wird durch eine elektrische Verbindung nach Anspruch 1 sowie ein Verfahren nach Anspruch 20 gelöst.

Das Flachteil kann als Vollmaterialteil, beispielsweise mit einem quadratischen oder rechteckigen Querschnitt gebildet sein. Das Anschlussteil kann ebenfalls aus Vollmaterial, beispielsweise mit einem quadratischen oder rechteckigen Querschnitt, gebildet sein und beispielsweise ebenfalls ein Flachteil sein oder eine Anschlussfahne, ein Crimpanschluss, ein Klemmenanschluss, ein Anschluss für einen Bolzen oder dergleichen. Das Anschlussteil kann ein Litzenleiter aus einem Metallwerkstoff, insbesondere aus Aluminiumwerkstoff oder Kupferwerkstoff sein. Sowohl das Flachteil als auch das Anschlussteil kann als Leiter eines Kabels gebildet sein. Das Kabel kann in dem Überlappungsbereich zwischen dem Anschlussteil und dem Flachteil abisoliert sein, so dass das blanke Metall von Flachteil und Anschlussteil im Überlappungsbereich übereinander angeordnet sein kann.

Das Anschlussteil kann aus einen massiven Leiter oder einen flexiblen Leiter gebildet sein. Der Grundwerkstoff von Anschlussteil und Flachteil kann gleich oder verschieden sein. Anschlussteil und Flachteil können beschichtet sein. Insbesondere kann das Flachteil vernickelt sein. Die Beschichtung kann insbesondere im Kontaktbereich erfolgen., Grundwerkstoff und Beschichtungswerkstoffe können voneinander verschieden sein.

Das Flachteil hat umfangsseitig vier Oberflächen, wobei bei einem rechteckigen Querschnitt zwei, bevorzugt parallel zueinander verlaufende breite Oberflächen und zwei, bevorzugt parallel zueinander verlaufende schmale Oberflächen gegeben sind. Das Flachteil hat eine Längserstreckung. Seitenkanten der breiten Oberflächen und Seitenkanten der schmalen Oberflächen verlaufen entlang der Längserstreckung. Stirnseitig hat das Flachteil Stirnkanten, die in Quererstreckung verlaufen. Die schmalen Oberflächen erstrecken sich entlang einer Höhenerstreckung des Flachteils.

Insbesondere die breite Oberfläche des Flachteils kann in einem Bereich als Kontaktoberfläche gebildet werden. Hierfür ist in der Kontaktoberfläche, also insbesondere im Bereich des Überlappungsbereichs zwischen Anschlussteil und Flachteil, die Oberfläche des Flachteils reliefförmig strukturiert. Auf diese reliefförmige Struktur wird das Anschlussteil aufgesetzt und reibverschweißt, insbesondere mittels Ultraschallschweißen.

Durch die reliefförmige Struktur der Kontaktoberfläche liegt das Anschlussteil zu Beginn des Schweißvorgangs nur auf einer geringen Gesamtfläche des Flachteils auf. Die Kontaktoberfläche hat eine Gesamtfläche, wobei durch die reliefförmige Struktur nur ein Bruchteil dieser Gesamtfläche zu Beginn des Schweißvorgangs in Kontakt mit dem Anschlussteil ist.

Dies führt dazu, dass zu Beginn des Schweißvorgangs die eingetragene Schweißenergie, insbesondere die Schwingungsenergie, nur auf der kleinen Berührfläche wirkt und hierdurch der Anpressdruck im Bereich der Berührfläche besonders hoch ist. Durch die Verringerung der Kontaktfläche aufgrund der Reliefstruktur ist die Reibkraft bei gegebenem Reibkoeffizient von den Fügepartnern zueinander im festen Aggregatzustand zu Beginn des Schweißvorgangs ausreichend klein, so dass das Schweißwerkzeug ausreichend kinetische Energie punktuell in die Fügezone einbringen kann, um die Fügepartner partiell aufzuschmelzen Mit zunehmender Schweißdauer wird mehr Energie in die Fügezone eingebracht. Die Randschichten der Fügepartner plastifizieren ausgehend von der anfänglichen Fügefläche. Die Fügefläche vergrößert sich aufgrund der Art der Struktur und des Plastifizierens der Fügepartner in der Fügezone. Durch das Plastifizieren verringert sich der Reibkoeffizient, so dass trotz zunehmender Kontaktfläche die kinetische Energie des Schweißwerkzeugs ausreicht, den Schweißvorgang abzuschließen.

Die Reliefstruktur führt dazu, dass im Bereich der Berührfläche zwischen Flachteil und Anschlussteil zu Beginn des Schweißvorgangs sehr schnell eine Plastifizierung der Werkstoffe von Flachteil und/oder Anschlussteil erfolgt. Nach und nach dringt das Anschlussteil durch die sich einstellende Plastifizierung tiefer in die reliefförmige Struktur ein.

Durch das Verschweißen entsteht entlang der Kontaktoberfläche zunächst einmal eine stoffschlüssige Verbindung. Durch die reliefförmige Struktur kommt es jedoch zusätzlich zu einem Formschluss zwischen dem Flachteil und dem Anschlussteil im Bereich der Kontaktoberfläche auch im verschweißten Zustand. Die Schweißenergie, die in die Kontaktoberfläche eingebracht wird, reicht aus, um die beiden Fügepartner Flachteil und Anschlussteil oberflächlich aufzuschmelzen und/oder zu plastifizieren. Hierbei ist die Relieffrom der Kontaktoberfläche bevorzugt so grob, dass diese auch nach dem Schweißvorgang erhalten bleibt und sich somit nicht nur ein Stoffschluss, sondern auch ein Formschluss zwischen Anschlussteil und Flachteil einstellt.

Die Struktur der Kontaktoberfläche verläuft entlang des Längsschnitts des Flachteils als Höhenprofil mit Tälern (Nuten) und Bergen (Nutstege). Dieses Höhenprofil ist entlang des Längsschnitts des Flachteils bevorzugt wellig. Dadurch, dass durch das Verschweißen die Struktur nur unwesentlich verändert wird und auch nach dem Verschweißen die Sturktur der Kontaktoberfläche noch vorhanden ist, ergibt sich im Bereich der Kontaktoberfläche nicht nur ein Stoffschluss zwischen Flachteil und Anschlussteil, sondern Flachteil und Anschlussteil verbinden sich auch formschlüssig. Beim Verschweißen wird einerseits im Bereich der Berge der Struktur Material des Flachteils plastifiziert, wodurch nach dem Schweißen eine Amplitude der Struktur kleiner ist als vor dem Schweißen, gleichzeitig dringt jedoch auch die Struktur in den Werkstoff des Anschlussteils beim Verschweißen ein, sodass eine im Längsschnitt im Wesentlichen gerade verlaufende Oberfläche des im Überlappungsbereich nach dem Verschweißen ebenfalls strukturiert ist und an die Struktur des Flachteils angepasst ist. Anschlussteil und Flachteil verzahnen somit ineinander, was die mechanische Festigkeit der Schweißverbindung erhöht.

Gemäß einem Ausführungsbeispiel wird vorgeschlagen, dass die Struktur regelmäßig periodisch ist. Somit folgen Berge auf Täler in einer Regelmäßigkeit mit einer gewissen Periodizität. Eine Periode kann als Abstand zwischen zwei benachbarten Bergen und/oder als Abstand zwischen zwei benachbarten Tälern verstanden werde.

Es hat sich herausgestellt, dass sowohl die Amplitude als auch die Periode der Struktur die Qualität der Schweißverbindung beeinflusst. Insbesondere muss die Amplitude und/oder Periode der Struktur abhängig von einem Werkstoffparameter der Kontaktoberfläche gewählt werden. Die Kontaktoberfläche kann aus dem Werkstoff des Flachteils oder einer metallischen Beschichtung gebildet sein. Je nach Werkstoff ist eine andere Amplitude und/oder eine andere Periode zu wählen. Ein Werkstoffparameter der zur Bestimmung von Amplitude und Periode herangezogen werden kann, ist die Dichte des Werkstoffs der Kontaktoberfläche.

Gemäß einem Ausführungsbeispiel wird vorgeschlagen, dass die Amplitude antiproportional zu der Dichte des Werkstoffs der Kontaktoberfläche ist. Je dichter der Werkstoff der Kontaktoberfläche ist, desto geringer sollte die Auslenkung der Struktur, insbesondere der halbe Abstand zwischen einem Berg (lokales Maximum) und einem Tal (lokales Minimum) sein. Bei einem dichten Werkstoff führt die geringere Amplitude dazu, dass ein noch ausreichender Formschluss erfolgt und insbesondere die Fügepartner nach dem Schweißvorgang im Bereich der Kontaktoberfläche vollständig aneinander anliegen.

Gemäß einem Ausführungsbeispiel wird vorgeschlagen, dass die Periode proportional zu der Dichte des Werkstoffs der Kontaktoberfläche ist.

Gemäß einem Ausführungsbeispiel wird vorgeschlagen, dass der Werkstoff des Flachteils eine Dichte > 8,2g/cm$^3$ hat. Für eine solche Dichte hat sich beispielsweise eine Amplitude von 0,2cm als sinnvoll herausgestellt.

Auch wird vorgeschlagen, dass der Werkstoff des Flachteils einen Leitwert von > 50MS/m aufweist. Es wird vorgeschlagen, dass die Dichte und/oder der Leitwert des Werkstoffs des Anschlussteils gleich derer des Flachteils sind.

Auch wird vorgeschlagen, dass der Werkstoff des Anschlussteils aus einer Aluminiumlegierung gemäß EN AW 2017A, EN AW 6082 oder EN AW 7075 gebildet ist.

Gemäß einem Ausführungsbeispiel wird vorgeschlagen, dass die Dichte und/oder der Leitwert des Werkstoffs des Flachteils geringer ist als die Dichte und/oder der Leitwert des Werkstoffs des Anschlussteils. Insbesondere wird vorgeschlagen, dass der Werkstoff des Flachteils eine Dichte zwischen 2,5g/cm$^3$ und 5g/cm$^3$ hat und einen Leitwert zwischen 30MS/m und 40MS/m hat. Auch wird vorgeschlagen, dass der Werkstoff des Anschlussteils eine Dichte zwischen 8g/cm$^3$ und 9g/cm$^3$ hat und einen elektrischen Leitwert zwischen 40MS/m - 50MS/m hat.

Gemäß einem Ausführungsbeispiel wird vorgeschlagen, dass die Struktur in Richtung x einer Längsachse der Kontaktoberfläche nach einer Funktion h(x)=hof(x) gebildet ist. Dabei ist ho die Amplitude und f(x) eine trigonometrische Funktion. Insbesondere ist f(x)=sin(2$\pi$x) oder cos(2$\pi$x).

In einem solchen Fall kann die Amplitude ho beispielsweise wie folgt abhängig von der Dichte gewählt werden.

| Dichte in $g/cm^3$ | $h_0$ in cm |
|---|---|
| 2,0 - 2,5 | 1,3 |
| 2,5 - 3,0 | 1,4 |
| 3,0 - 3,5 | 1,3 |
| 3,5 - 4,0 | 1,2 |
| 4,0 - 4,5 | 1,1 |
| 4,5 - 5,0 | 1,0 |
| 5,0 - 5,5 | 0,9 |
| 5,5 - 6,0 | 0,8 |
| 6,0 - 6,5 | 0,7 |
| 6,5 - 7,0 | 0,6 |
| 7,0 - 7,5 | 0,5 |
| 7,5 - 8,0 | 0,4 |
| 8,0 - 8,5 | 0,3 |
| 8,5 - 9,0 | 0,2 |

Gemäß einem Ausführungsbeispiel wird vorgeschlagen, dass die Struktur aus Bergen (Nutstegen) und Tälern (Nuten) gebildet ist. Die Berge liegen dabei bevorzugt in einer Ebene unterhalb einer Ebene der breiten Oberfläche und die Täler in einer Ebene unterhalb der Ebene der Berge.

Das Flachteil erstreckt sich an einer breiten Oberfläche in Richtung der Kontaktoberfläche. Im Bereich der Kontaktoberfläche wird dann die Struktur eingebracht. Die Struktur wird derartig eingebracht, dass die Ebene der Berge der Struktur unterhalb der breiten Oberfläche des Flachteils. Die Höhenerstreckung des Flachteils im Bereich der Kontaktoberfläche ist kleiner als die Höhenerstreckung des Flachteils vor der Kontaktoberfläche. Durch die geringere Aufbauhöhe des Flachteils im Bereich der Kontaktoberfläche wird auch die Aufbauhöhe der elektrischen Verbindung reduziert. Wird das Anschlussteil auf die Berge aufgelegt, so ist die Aufbauhöhe geringer oder gleich, als wenn das Anschlussteil auf die breite Oberfläche des Flachteils aufgelegt würde. Nach dem Verschweißen ist das Anschlussteil in die Struktur eingedrungen, so dass sich bevorzugt eine Verbindung ergibt, bei der die breite Oberfläche des Flachteils am Übergang zu dem Anschlussteil nur einen geringen, bevorzugt keinen Höhenversatz aufweist. Somit kommt es zu einem reduzierteren Höhenversatz, gegenüber einer Verbindung, bei der das Anschlussteil unmittelbar auf die breite Oberfläche des Flachteils aufgelegt würde.

Gemäß einem Ausführungsbeispiel wird vorgeschlagen, dass in einem stirnseitigen Endbereich die Kontaktoberfläche frei von der Struktur ist. Die Struktur setzt sich von der Mitte des Flachteils hin zu einem stirnseitigen Endbereich fort. Vor dem stirnseitigen Endbereich jedoch wird die Struktur beendet, so dass das Flachteil im stirnseitigen Ende eben ausläuft. Hierdurch wird verhindert, dass es zu einer Kerbbelastung der elektrischen Verbindung im Bereich des Endbereichs der Kontaktoberfläche kommt. Die Struktur läuft insbesondere ausgehend von einem Nulldurchgang der wellenförmigen Struktur aus in den flachen Endbereich.

Gemäß einem Ausführungsbeispiel wird vorgeschlagen, dass in einem stirnseitigen Endbereich die Kontaktoberfläche parallel zu einer breiten Oberfläche des Flachleiters vor der Kontaktoberfläche verläuft. Die Längserstreckung des Endbereichs ist insbesondere zumindest eine halbe, bevorzugt eine ganze Periode.

Gemäß einem Ausführungsbeispiel wird vorgeschlagen, dass das Flachteil im Bereich der Kontaktoberfläche eine geringere Höhenerstreckung hat als in einem Bereich vor der Kontaktoberfläche. Wie zuvor bereits erläutert, können die Berge in einer Ebene unterhalb der Ebene des Flachteils vor der Kontaktoberfläche liegen. Dadurch wird der Aufbau bzw. die Aufbauhöhe der Verbindung zwischen Flachteil und Anschlussteil reduziert, was vorteilhaft hinsichtlich der Bauraumoptimierung ist.

Auch wird vorgeschlagen, dass das Flachteil im Bereich der Kontaktoberfläche eine geringere Breitenerstreckung hat als in einem Bereich vor der Kontaktoberfläche. Das Flachteil kann im Bereich der Kontaktoberfläche schmaler sein als vor der Kontaktoberfläche. Dies hat den Vorteil, dass das Anschlussteil, wenn es die Kontaktoberfläche an den Seitenkanten überragt.

Somit wird auch vorgeschlagen, dass das Flachteil ein Flachleiter ist, dass das Anschlussteil im Überlappungsbereich das Flachteil in der Breitenerstreckung überragt und dass das Anschlussteil um zumindest eine Längskante im Überlappungsbereich geformt ist. Das Anschlussteil wird mittels einer Sonotrode gegen das Flachteil gedrückt. Durch das Einbringen der Schweißenergie fließt das Anschlussteil in dem den Überlappungsbereich überragenden Bereich um das Flachteil. Dadurch wird die Fügezone vor Umwelteinflüssen geschützt.

Im verbundenen Zustand liegt das Anschlussteil derart auf der Kontaktoberfläche, dass es bevorzugt beidseitig die Längskante des Flachteils überragt. Diese das Flachteil überragenden Bereiche können in Richtung der schmalen Oberfläche des Flachteils umgebogen vorzugsweise umflossen werden. Dadurch, dass die Breitenerstreckung des Flachteils im Bereich der Kontaktoberfläche geringer ist als vor der Kontaktoberfläche, wird die Gesamtbreite des Flachteils durch das Umschließen des Anschlussteils um die Längskanten bevorzugt nicht vergrößert.

Gemäß einem Ausführungsbeispiel wird vorgeschlagen, dass das Anschlussteil das Flachteil im Überlappungsbereich U-förmig umschließt. Durch das Umschließen U-förmig oder auch nur einseitig erfährt die Verbindung eine Stabilisierung gegenüber einer Kraft in Querrichtung des Flachteils und ist somit stabiler. Auch Torsionen um eine Flächennormale der breiten Oberfläche werden durch das Umschließen besser kompensiert und wirken nicht unmittelbar auf die Schweißung. Ein weiterer Vorteil besteht darin, dass das umschließen U-förmig ein Eindringen von Gasen oder Fluiden in die Fügezone verhindern.

Gemäß einem Ausführungsbeispiel wird vorgeschlagen, dass das Flachteil im wenigstens Bereich der Kontaktoberfläche metallisch beschichtet ist. Eine solche Beschichtung kann beispielsweise walzplattiert sein. Beispielsweise ist es möglich, einen Aluminiumstreifen auf das Flachteil aufzubringen, insbesondere mittels Walzplattieren.

Gemäß einem Ausführungsbeispiel wird vorgeschlagen, dass das Flachteil an seiner in Längsrichtung der Kontaktoberfläche gegenüberliegenden Seite eine Anschlusskonsole aufweist. Über diese Anschlusskonsole lässt sich beispielsweise ein elektrischer Leiter kontaktieren.

Die Anschlusskonsole kann als Anschlussbolzen, Anschlussfahne, Crimpkontakt, Anschlussöffnung, Kabelschuh oder dergleichen gebildet sein. Insbesondere kann die Anschlusskonsole als Anschlussbohrung gebildet sein.

Zur Kontaktierung mit einem Leiter aus einem gegenüber dem Werkstoff des Flachteils anderen Werkstoffs wird vorgeschlagen, dass die Anschlusskonsole metallisch beschichtet ist. Insbesondere ist das Flachteil um die Anschlussöffnung herum metallisch beschichtet. Somit kann bei einem Verschrauben eine gute Kontaktoberfläche sichergestellt werden.

Zur Aufnahme von Stauchkräften, die in Längsrichtung auf die Schweißverbindung wirken, wird vorgeschlagen, dass das Flachteil ein S-förmiges Längsprofil aufweist. Hierdurch ist es möglich, Stauchkräfte elastisch federnd durch das Flachteil aufzunehmen. Die mechanische Belastung der Schweißverbindung wird somit reduziert.

Gemäß einem Ausführungsbeispiel ist das Flachteil aus Aluminiumwerkstoff gebildet und das Anschlussteil aus Kupferwerkstoff. Ein Aluminiumwerkstoff ist insbesondere E-Aluminium, beispielsweise Al 99,5 oder eine andere Aluminiumlegierung. Ein Kupferwerkstoff ist insbesondere eine Kupferlegierung. An das Anschlussteil, welches aus dem Kupferwerkstoff gebildet ist, lässt sich beispielsweise mittels Crimpen, Löten, Nieten, Schrauben, Schweißen oder dergleichen eine weitere Kupferleitung, beispielsweise eine flexible Kupferlitzenleitung anbringen. Das Flachteil ist aus dem Aluminiumwerkstoff und kann beispielsweise als Seele eines Flachkabels gebildet sein und außerhalb der Verbindung mit dem Anschlussteil isoliert sein.

Gemäß einem Ausführungsbeispiel ist das Anschlussteil aus Aluminiumwerkstoff gebildet und das Flachteil aus Kupferwerkstoff. In diesem Fall kann das Flachteil für eine Verbindung, insbesondere eine sortenreine Verbindung mit einem Kupferkabel genutzt werden. Ein Kupferwerkstoff ist insbesondere eine Kupferlegierung. An das Flachteil, welches aus dem Kupferwerkstoff gebildet ist, lässt sich beispielsweise mittels Crimpen, Löten, Nieten, Schrauben, Schweißen oder dergleichen eine weitere Kupferleitung, beispielsweise eine flexible Kupferlitzenleitung anbringen. Das Anschlussteil ist aus dem Aluminiumwerkstoff und kann beispielsweise als Seele eines Flachkabels gebildet sein und außerhalb der Verbindung mit dem Anschlussteil isoliert sein.

Auch wird vorgeschlagen, dass das Flachteil und das Anschlussteil aus einem gleichen metallischen Werkstoff, z.B. einem Aluminiumwerkstoff oder einem Kupferwerkstoff gebildet sind.

Die reliefförmige Kontaktoberfläche wird insbesondere spanhebend oder spanlos in das Flachteil eingebracht. Dabei ist es beispielsweise möglich, dass vor der Verbindung das Flachteil im Bereich der Kontaktoberfläche überfräst wird, um so die reliefförmige Kontaktoberfläche zu formen. Eine spanlose Verformung kann beispielsweise mittels Biegen, Stanzen, Pressen, Ziehen, Stauchen, Schmieden oder dergleichen erfolgen.

Gemäß einem Ausführungsbeispiel wird vorgeschlagen, dass die reliefförmige Kontaktoberfläche mittels Biegen, Stanzen, Pressen, Ziehen, Stauchen, Schmieden in das Flachteil eingebracht wird. Beispielsweise mittels eines Werkzeugs, beispielsweise eines geeigneten Stempels, kann die reliefförmige Kontaktoberfläche in das Flachteil gebracht werden.

Die reliefförmige Kontaktoberfläche ist bevorzugt eine geschlossene Oberfläche und weist keine Durchbrüche durch das Flachteil auf. Hierdurch wird sichergestellt, dass im verschweißten Zustand das Anschlussteil vollständig von dem Flachteil aufgenommen ist und eine vollflächige Verbindung zwischen Anschlussteil und Flachteil gebildet ist. Dies bewirkt einen guten, geringen Übergangswiderstand. Durch das Reibverschweißen wird gegebenenfalls eine Verunreinigung auf der Oberfläche der Fügepartner entfernt. Dies ist insbesondere beim Ultraschallverschweißen der Fall, bei dem beispielsweise eine Aluminiumoxidschicht aufgebrochen wird. Durch die reliefförmige Struktur wird die Gesamtoberfläche der Kontaktoberfläche gegenüber einer glatten Struktur vergrößert, was dazu führt, dass die Kontaktfläche zwischen Anschlussteil und Flachteil gegenüber einer Verbindung zweier glatter Oberflächen vergrößert ist. Diese größere Berührfläche führt zu einem geringeren Übergangswiderstand, was insbesondere in automotiven Anwendungen vorteilhaft ist.

Die reliefförmige Struktur kann beispielsweise derart sein, dass in einem Längsschnitt, der parallel zur Längsachse des Flachteils verläuft, die Struktur wellenförmig oder stufig ist. Auch ist es möglich, dass in einem Querschnitt, der insbesondere in einer Ebene senkrecht zur Längsachse des Flachteils verläuft, die Oberflächenstruktur wellenförmig oder stufig ist. Eine wellenförmige Form muss nicht zwingend streng und monoton verlaufend sein, sondern kann auch sägezahnförmig, V-förmig, U-förmig oder dergleichen sein. Auch muss die Abfolge von Wellental und Wellenberg nicht zwingend regelmäßig sein.

Gemäß einem Ausführungsbeispiel wird vorgeschlagen, dass die strukturierte Oberfläche in einer Draufsicht wellenförmig oder stufig verläuft. Nicht nur in der Tiefe, sondern auch in der Längsrichtung der reliefförmigen Struktur kann diese wellenförmig oder stufig sein. Auch dies führt zu einer Vergrößerung der Kontaktoberfläche zwischen Anschlussteil und Flachteil.

Erfindungsgemäß ist das Anschlussteil im verschweißten Zustand vollständig in die reliefförmige Oberfläche des Flachteils eingedrungen. Bei einer reliefförmigen Struktur gibt es Täler und Berge, wobei das Tal als Vertiefung verstanden werden kann und ein Berg als Erhebung verstanden werden kann. Hierbei versteht es sich, dass ausgehend von der Oberfläche des Flachteils, auf der die Kontaktoberfläche geformt wird, Vertiefungen in das Material des Flachteils eingebracht werden können und/oder Erhebungen aus der Oberfläche heraus geformt werden können. Dadurch dass das Anschlussteil vollständig in die Vertiefung eindringt und/oder die Erhebung vollständig in das Anschlussteil eindringt, wird ein vollflächiger Kontakt zwischen Anschlussteil und Flachteil über die Kontaktoberfläche erwirkt. Durch die Erhebung und/oder Vertiefung wird, wie bereits erläutert, eine Vergrößerung der Kontaktoberfläche gegenüber einer glatten Oberfläche erzielt. Im verschweißten Zustand sind Erhebung und/oder Vertiefung nach wie vor durch den Werkstoff des Flachteils gebildet. Lediglich in einem Übergangsbereich bildet sich eine intermetallische Fügezone, deren Ausdehnung senkrecht zur Kontaktoberfläche jedoch geringer ist, als die Ausdehnung von Vertiefung und/oder Erhebung senkrecht zur Kontaktoberfläche.

Dadurch, dass das Material des Flachteils nach dem Verschweißen nach wie vor Erhebungen und/oder Vertiefungen aufweist, bildet sich in einem Schnitt durch die Verbindung im verschweißten Zustand, der quer zur Längsrichtung der Vertiefungen und/oder Erhebungen der reliefförmigen Kontaktoberfläche verläuft, Zonen in denen das Anschlussteil vollständig in den Vertiefungen angeordnet ist.

Wie bereits erläutert, ist das Flachteil im Bereich der Kontaktoberfläche strukturiert reliefförmig.

Dies wird durch Vertiefungen und/oder Erhebungen in der Oberfläche des Flachteils bewirkt.

Denkbar ist auch das beide Fügepartner im Kontaktbereich eine reliefförmige Oberfläche aufweisen die geometrisch ineinander greifen um bauraumtechnische oder andere denkbare funktionserfüllende Eigenschaften auszubilden. Es wird insbesondere vorgeschlagen, dass in einer Fügezone die einander zugewandten Oberflächen von Flachteil und von Kontaktteil reliefförmig strukturiert sind. Insbesondere sind dies Oberflächen gleich strukturiert. Die dem Flachteil zugewante Oberfläche des Anschlussteils kann genau so strukturiert sein, wie es für das Flachteil beschrieben ist.

Gemäß einem Ausführungsbeispiel wird vorgeschlagen, dass die Vertiefungen durch Nuten in der Kontaktoberfläche gebildet sind. Gemäß einem weiteren Ausführungsbeispiel wird vorgeschlagen, dass die Erhebungen durch aus der Kontaktoberfläche ragende Stege gebildet sind.

Wie bereits erläutert, müssen die Erhebungen nicht aus der ebenen Oberfläche des Flachteils, in dem die Kontaktoberfläche gebildet ist, herausragen. Daher können die Erhebungen auch durch Nutstege zwischen Nuten in der Kontaktoberfläche gebildet sein. Die Erhebungen können somit insbesondere unterhalb der Kontaktoberfläche bzw. der sonstigen Oberfläche des Flachteils, in der die Kontaktoberfläche eingebracht ist, liegen.

Wie bereits erläutert, müssen die Vertiefungen nicht in die ebene Oberfläche des Flachteils, in dem die Kontaktoberfläche gebildet ist, eindringen. Daher können die Vertiefungen auch zwischen zwei Stegen, die als Erhebung gebildet sind, gebildet sein. Die Vertiefungen können mit ihrem Grund somit insbesondere planparallel zu der Kontaktoberfläche bzw. der sonstigen Oberfläche des Flachteils, in der die Kontaktoberfläche eingebracht ist, liegen.

Ein weiterer Aspekt ist ein Verfahren zum Herstellen einer elektrischen Verbindung nach Anspruch 20.

Hierbei wird beispielsweise zunächst ein Flachteil bereitgestellt. Das Flachteil kann dabei beispielsweise als Seele eines Flachkabels gebildet sein. Das Flachkabel kann beispielsweise im Bereich der Verbindung abisoliert sein. Die Abisolation kann beispielweise mittels Laser erfolgen. Das Flachteil kann jedoch auch Teil eines Kontaktteils, beispielsweise eines Crimpanschlusses, einer Anschlussfahne, einer Anschlussklemme, eines Anschlussbolzens oder dergleichen sein.

In das bereitgestellte Flachteil wird eine strukturierte, reliefförmige Oberfläche eingebracht. Dabei kann die Oberfläche spanlos oder spanhebend eingebracht werden. Beispielsweise ist es möglich, die Oberfläche mittels Fräsen zu strukturieren. Auch ist es möglich, die Oberfläche beispielsweise mittels spanlosem Umformen, wie oben bereits erläutert, zu profilieren, so dass sie reliefförmig strukturiert ist. Die Struktur ist dabei streifenförmig.

Zusätzlich zum Einbringen der strukturierten reliefförmigen Oberfläche wird ein Anschlussteil bereitgestellt. Das Anschlussteil kann wie das Flachteil gebildet sein. Es ist möglich, dass das Anschlussteil gleichgeformt ist oder dass das Anschlussteil ein an das Flachteil anzubringendes Kontaktteil ist.

Die beiden Teile, Flachteil und Anschlussteil, werden anschließend aufeinander aufgelegt. Hierbei erfolgt das Auflegen im Bereich einer Überlappung zwischen Anschlussteil und Flachteil, wobei diese Überlappung im Bereich der reliefförmigen Oberfläche ist. Diese reliefförmige Oberfläche wird auch als Kontaktoberfläche verstanden.

Die reliefförmige Oberfläche wird in das Flachteil insbesondere im Bereich der breiten Oberfläche eingebracht. Die reliefförmige Oberfläche wird insbesondere in einem Endbereich eines Flachteils eingebracht, kann jedoch auch mittig zwischen zwei Enden liegen und beispielweise von einer Isolation beidseitig eingefasst sein. Anschließend erfolgt das Verschweißen zwischen Anschlussteil und Flachteil im Bereich der Kontaktoberfläche durch Reibschweißen, insbesondere Ultraschallreibschweißen. Dazu wird ein Schweißwerkzeug, insbesondere ein Ultraschallwerkzeug, beispielsweise eine Sonotrode, auf das Anschlussteil und/oder Flachteil aufgebracht und die beiden Teile werden zusammengepresst. Auf der dem Ultraschallwerkzeug gegenüberliegenden Seite kann beispielweise ein Amboss als Gegenlager dienen.

Die verpressten Teile werden mittels des Schweißwerkzeugs reibverschweißt, insbesondere ultraschallverschweißt.

Da die Oberfläche, die verschweißt werden soll, die Kontaktoberfläche ist und diese strukturiert reliefförmig ist, liegt zu Beginn des Schweißvorgangs das Anschlussteil nur mit einem Bruchteil seiner Gesamtoberfläche auf der Kontaktoberfläche auf. Die Anpresskraft verteilt sich somit auf eine sehr kleine Fläche, so dass der Anpressdruck im Bereich der initialen Berührfläche sehr groß wird. Dies führt dazu, dass der Anpressdruck gegenüber herkömmlichen Schweißverfahren reduziert sein kann.

Außerdem kommt es durch diesen hohen Anpressdruck sehr schnell zu einer Plastifizierung der Fügepartner Anschlussteil und Flachteil. Durch dieses Plastifizieren dringt das Anschlussteil während des Schweißvorgangs nach und nach in die reliefförmige Struktur der Kontaktoberfläche ein.

Wie zuvor erläutert, erstreckt sich das Höhenprofil in Richtung der Längsachse reliefförmig. In Richtung der Querachse verläuft das Höhenprofil linear. Die Berge und Täler verlaufen parallel zur Querasche. Zur Erzielung der oben genannten Vorteile wird vorgeschlagen, dass während des Verschweißens, das Schweißwerkzeug parallel zu der reliefförmigen Struktur schwingt. Das heißt, dass eine Schwingungsrichtung des Schweißwerkzeugs parallel zu einem Verlauf zumindest eines Bergs der Struktur ist. Das Schweißwerkzeug führt eine Schwingung parallel zu der Struktur durch. Diese Schwingung wird über eine Kraftübertragung auf das auf dem Flachteil aufliegende Anschlussteil übertragen. Beim Verschweißen wird das Anschlussteil zunächst über die durch die Berge gebildete Ebene der Struktur geführt. Die Auflagefläche ist relativ klein, sodass bei bereits geringem Anpressdruck ausreichend kinetische Energie in die Verbindungsstelle eingebracht werden kann, um diese zu plastifizieren.

Zum Ende des Schweißvorgangs ist erfindungsgemäß das Anschlussteil vollständig in die reliefförmige Oberfläche des Flachteils eingedrungen und es bildet sich eine vollflächige Verbindung zwischen dem Anschlussteil und der Kontaktoberfläche.

Es wird auch vorgeschlagen, dass vor dem Verschweißen des Anschlussteil auf die reliefförmigen Struktur gedrückt wird, dass dadurch eine relative Position der Längsachsen von Anschlussteil und Flachteil zueinander fixiert ist und dass anschließend Flachteil und Anschlussteil miteinander verschweißt werden. Durch das Drücken des Anschlussteils gegen die Struktur verformt sich das Anschlussteil im Bereich seiner Oberfläche entsprechen der Struktur. Der Anpressdruck ist ausreichend, dass es zu einer plastischen Verformung der Oberfläche des Anschlussteils entsprechend der Struktur kommt. Es kommt bereits zu einem Formschluss zwischen Anschlussteil und Flachteil durch die Struktur. Dieser Formschluss verhindert, dass Anschlussteil und Flachteil hinsichtlich ihrer relativen Lage entlang ihrer Längsachsen verschoben werden. Wird nun Schwingungsenergie eingebracht, so verrutschen die Teile nicht mehr gegeneinander, sondern sind durch die Struktur zueinander vorpositioniert. Dadurch wird die Positionierung der Teile zueinander prozesssicher.

Nachfolgend wird der Gegenstand anhand einer Ausführungsbeispiele zeigenden Zeichnung näher erläutert. In der Zeichnung zeigen:

Fig. 1a-c Bauteile, die Flachteil und/oder Anschlussteil sein können;

Fig. 2a,b ein Flachteil mit einer strukturierten, reliefförmigen Oberfläche gemäß einem Ausführungsbeispiel;

Fig. 3 einen Längsschnitt durch ein Flachteil;

Fig. 4 eine Ansicht eines Flachteils;

Fig. 5 eine Schwingungsrichtung einer Sonotrode;

Fig. 6a-c verschiedene Flachteile;

Fig. 7a-c ein Umschließen eines Kontaktbereichs;

Fig. 8a,b ein Flachteil mit einer strukturierten, reliefförmigen Oberfläche gemäß einem Ausführungsbeispiel;

Fig. 9a-d Flachteile mit strukturierten, reliefförmigen Oberflächen gemäß weiteren Ausführungsbeispielen;

Fig. 10 aneinander anliegende Flachteile und Anschlussteile gemäß einem Ausführungsbeispiel;

Fig. 11 ein Überlappungsbereich zwischen Anschlussteil und Flachteil gemäß einem Ausführungsbeispiel;

Fig. 12 eine Verschweißung zwischen Anschlussteil und Flachteil gemäß einem Ausführungsbeispiel;

Fig. 13          eine Detaildarstellung einer Fügezone;

Fig. 14          der Ablauf eines gegenständlichen Verfahrens gemäß einem Ausführungsbeispiel.

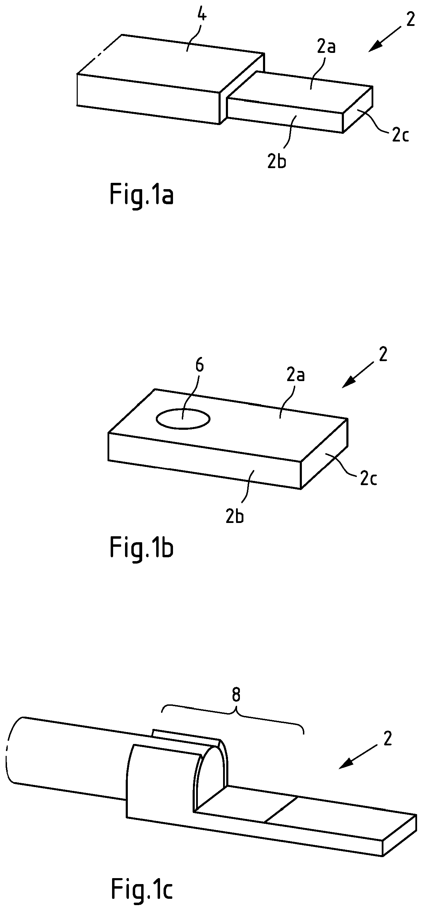

Fig. 1 zeigt ein Flachteil 2 eines Flachkabels 4. Das Flachteil 2 hat einen rechteckförmigen Querschnitt mit zwei einander gegenüberliegenden breiten Oberflächen 2a und zwei einander gegenüberliegenden schmalen Oberflächen 2b sowie einer Stirnfläche 2c.

Das Flachteil 2 ist endseitig von einer Isolierung des Kabels 4 entfernt und kann dort für die gegenständliche Verbindung genutzt werden.

Fig. 1b zeigt ein weiteres Flachteil 2, welches beispielsweise als Anschlussfahne mit einer Bohrung 6 gebildet ist.

Fig. 1c zeigt ein weiteres Flachteil 2, welches übergeht in einen Crimpanschluss in einem Crimpbereich 8.

Die Ausführungen für das Flachteil 2 gelten gleichermaßen für ein Anschlussteil 10, so dass die in den Figuren 1a-c gezeigten Flachteile 2 auch Anschlussteile 10 sein können. Ein Anschlussteil 10 kann darüber hinaus auch ein Litzenleiter sein.

Flachteil 2 und/oder Anschlussteil 10 kann aus Kupferwerkstoff oder Aluminiumwerkstoff gebildet sein. Insbesondere ist eine Verbindung zwischen einem Kupferwerkstoff einerseits und einem Aluminiumwerkstoff andererseits bevorzugt.

Zum Verbinden von Flachteil mit Anschlussteil wird das Flachteil 2 zunächst im Bereich einer Kontaktoberfläche 10 reliefförmig strukturiert.

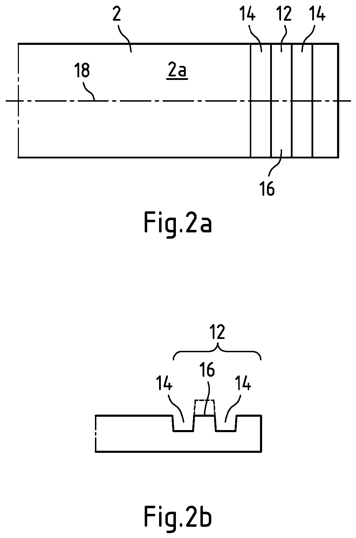

Fig. 2a zeigt eine Draufsicht auf ein Flachteil 2 mit einer Kontaktoberfläche 12. Die Kontaktoberfläche 12 ist gebildet durch Nuten 14 und dazwischenliegenden Nutstegen 16. Die Nuten 14 können als Vertiefungen verstanden werden und die Nutstege 16 als Erhebungen.

In der Fig. 2b ist zu erkennen, dass die Stege 16 nicht aus der Ebene der breiten Oberfläche 2a herausragen, sondern planparallel dazu liegen. Es ist jedoch auch möglich und gestrichelt in der Fig. 2b angedeutet, dass die Stege 16 erhaben sind und beispielsweise aus der Ebene der breiten Oberfläche 2a herausragen können. Fig. 2b zeigt den Schnitt durch das Flachteil 2 entlang seiner Längsachse 18. Eine Querachse 20 verläuft senkrecht zur Längsachse 18 in die Zeichenebene hinein. Die Nuten 14 und Nutstege 16 verlaufen parallel zur Querachse 20.

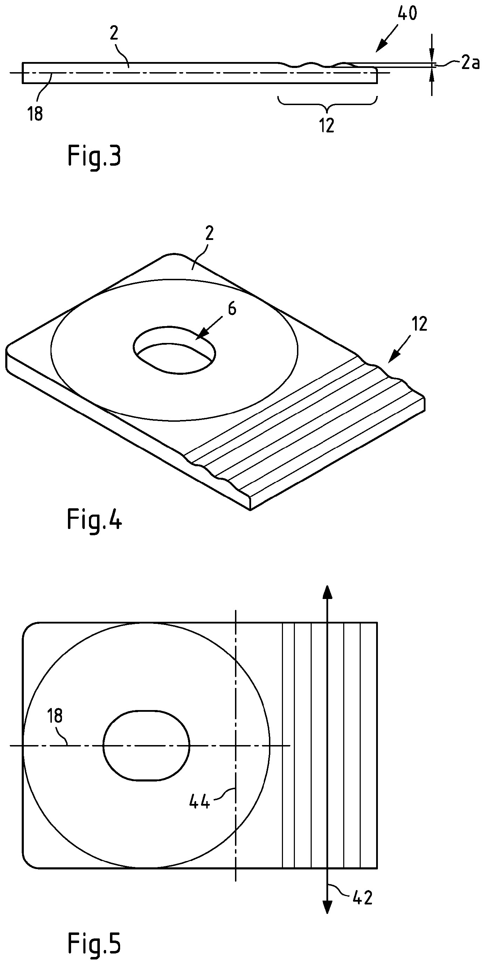

Die Fig. 3 zeigt einen Längsschnitt entlang der Längsachse 18 durch ein Flachteil 2. Zu erkennen ist, dass das Flachteil 2 im Bereich einer Kontaktoberfläche 12, dass heißt an einem stirnseitigen Endbereich, eine periodische, regelmäßige Reliefstruktur hat. Die Amplitude der Auslenkung der Reliefstruktur beträgt den Wert 2a und die Reliefstruktur folgt der Funktion $a * \sin 2\pi x$, wobei x in Richtung der Längsachse 18 verläuft. Im Argument der sin-Funktion kann noch ein Faktor angegeben sein, der die Periode bestimmt. Der Faktor a, als auch der Faktor im Argument der sin-Funktion kann abhängig von der Dichte des Werkstoffs des Flachteils 2 sein.

Ferner ist zu erkennen, dass in einem stirnseitigen Endbereich 40, die Struktur nicht mehr reliefförmig ist, sondern die Oberfläche des Flachteils 2 dort parallel zu der Oberfläche im Bereich vor der Kontaktoberfläche 12 verläuft.

Fig. 4 zeigt eine Ansicht eines Flachteils 2 mit einer Kontaktoberfläche 12 mit einer Bohrung 6. Im Bereich um die Bohrung 6 herum ist eine Beschichtung auf das Flachteil 2 aufgebracht, beispielsweise walzplattiert. Die Beschichtung kann metallisch sein.

Fig. 5 zeigt die Schwingungsrichtung 42. Die Schwingungsrichtung 42 ist senkrecht zur Längsachse 18, also parallel zu einer Querachse 44. Die Nuten 14 als auch die Nutstege 16 verlaufen parallel zur Querachse 44.

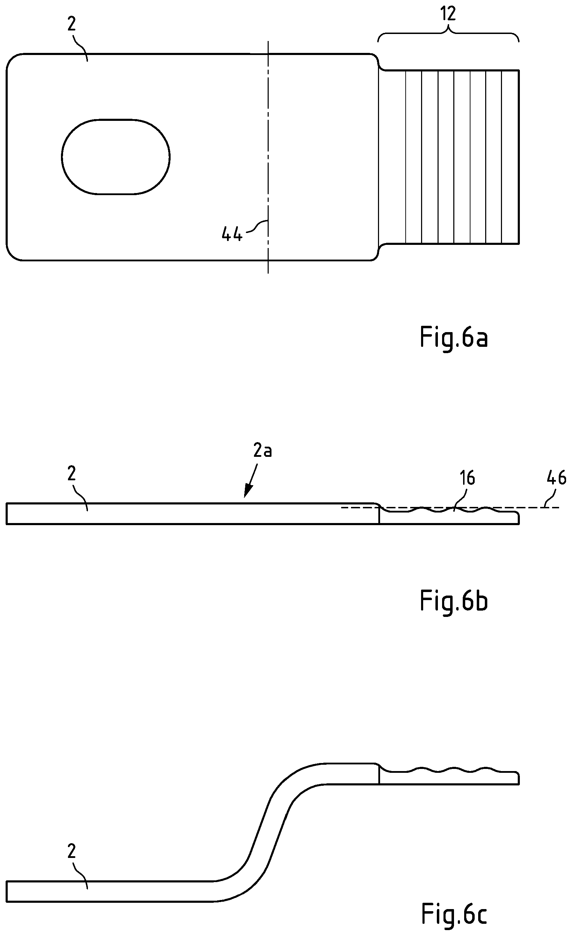

Die Quererstreckung zur Querachse 44 kann im Bereich der Kontaktoberfläche 12 geringer sein als vor dem Bereich der Kontaktoberfläche 12, wie in Fig. 6a dargestellt ist. Zu erkennen ist, dass die Quererstreckung sprungförmig reduziert ist, von einem Bereich vor der Kontaktoberfläche 12 hin zu einem Bereich der Kontaktoberfläche 12.

Wie in Fig. 6b gezeigt, können die Nutstege 16 der Kontaktoberfläche 12 in einer Ebene 46 liegen, die unterhalb der Ebene der breiten Oberfläche 2a liegt. Hierdurch wird die Aufbauhöhe einer Verbindung zwischen Flachteil 2 und Anschlussteil 10 reduziert.

In Fig. 6c ist gezeigt, dass das Längsprofil des Flachteils 2 S-förmig sein kann. Hierdurch ist es möglich, Stauchkräfte parallel zu Längsachse 18 aufzunehmen.

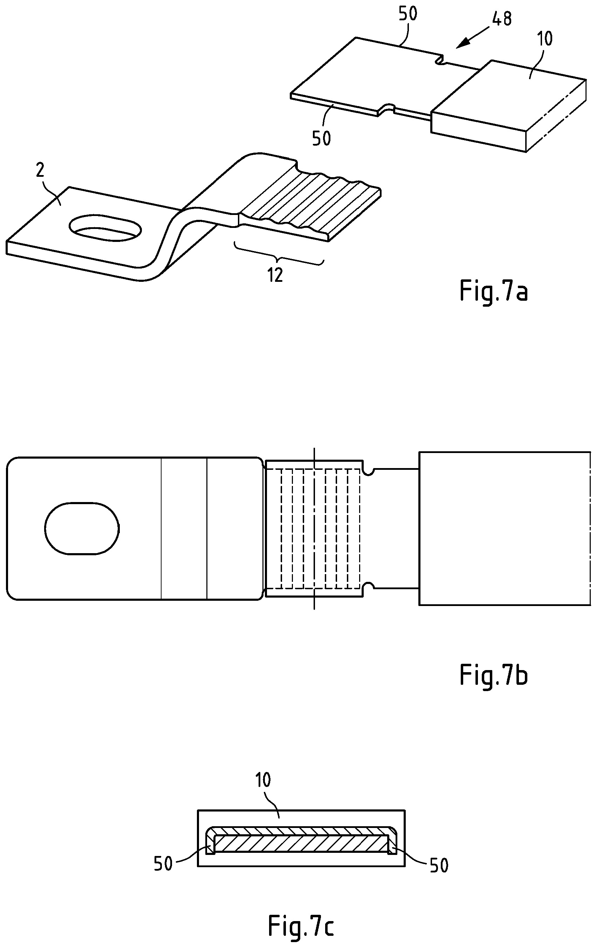

Fig. 7a zeigt eine Ansicht, bei der ein Anschlussteil 10 an ein Flachteil 2 heranbewegt wird. Das Anschlussteil 10 wird mit seinem stirnseitigen Ende auf die Kontaktoberfläche 12 aufgesetzt. Dabei ist an dem stirnseitigen Ende des Anschlussteils 10 ein Fügebereich vorgesehen, der optional über Kerben 48 gegenüber dem Rest des Anschlussteils 10 abgegrenzt ist. Die optionalen Kerben 48 sind an den längsseitigen Seitenkanten des Anschlussteils 10 eingebracht.

Das Anschlussteil 10 wird auf das Flachteil 2 im Bereich der Kontaktoberfläche 12 aufgesetzt. Anschließend wird auf das Anschlussteil 10 in der Überlappungszone ein Schweißwerkzeug aufgesetzt. Insbesondere wird eine Sonotrode aufgesetzt, welche durch einen an dem Flachteil anliegenden Amboss gekontert ist. Die Sonotrode wird in Schwingung versetzt und schwingt in Schwingungsrichtung 42 parallel zu der Ausbreitungsrichtung der Nuten 14 und Nutstege 16. Durch die eingebrachte Schwingung kommt es insbesondere bei Aluminium zu einem Umformen der Seitenkanten 50 des Anschlussteils 10 um das Flachteil 2, wie in Fig. 7c zu erkennen ist. Das Anschlussteil 10 umschließt somit die Kontaktoberfläche 12 U-förmig. Diese Umformung wird während des Schweißprozesses erzielt und benötigt keinen zusätzlichen Prozessschritt. Auch kann es zu einer stoffschlüssigen Verbindung zwischen dem Anschlussteil und den schmalen Oberflächen des Flachteils durch die eingebrachte Schweißenergie kommen.

Die Verbindung zwischen dem Anschlussteil 10 und dem Flachteil 2 ist in Fig. 7 b dargestellt.

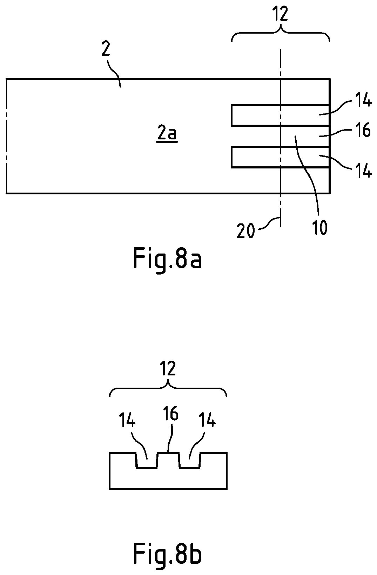

Fig. 8a zeigt ein weiteres Ausführungsbeispiel, bei welcher die Nuten 14 und Stege 16 parallel zur Längsachse 18 verlaufen. Fig. 8b zeigt einen Querschnitt entlang der Achse 20, welche senkrecht zur Längsachse 18 liegt. Auch hier sind Nuten 14 und Stege 16 zu erkennen.

In der Fig. 2 sind Nuten 14 und Stege 16 stufig entlang der Längsachse 18. Bei dem Flachteil gemäß Fig. 8a sind Nuten 14 und Stege 16 stufig entlang der Querachse 20.

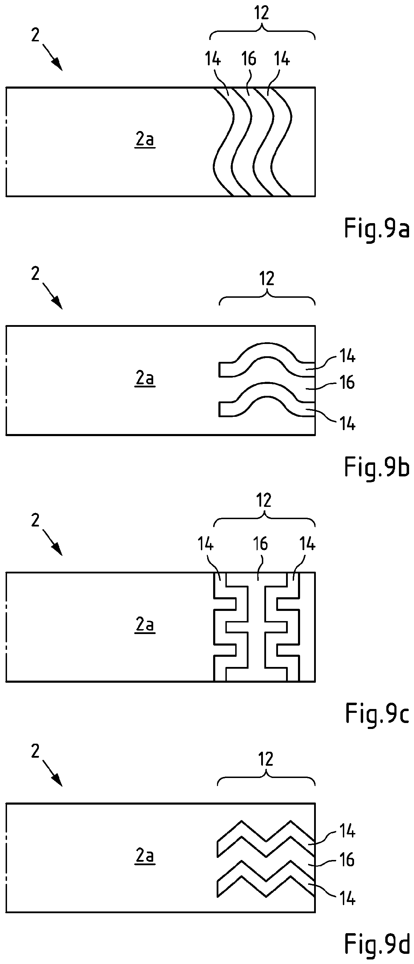

Eine Wellenform entlang der Längserstreckung der Nuten 14 und/oder Stege 16 ist in den Figuren 9a-d gezeigt. Fig. 9a zeigt, dass auf der breiten Oberfläche 2a des Flachteils 2 entlang der Querachse 20 die Nuten 14 und die Stege 16 in ihrer Längserstreckung wellenförmig verlaufen. In der Fig. 9b verlaufen die Nuten 14 und Stege 16 dagegen in ihrer Längserstreckung stufenförmig. Gemäß der Fig. 9c erstrecken sich Nuten 14 und Stege 16 im Gegensatz zu Fig. 9a parallel zur Längsachse 18 und sind ebenfalls wellenförmig. In der Fig. 9d erstrecken sich Nuten 14 und Stege 16 im Gegensatz zur Fig. 2b in Längsachse 18 und sind zahnförmig.

All die gezeigten Formen von Erhebungen und Vertiefungen im Bereich einer Kontaktfläche 12 können als strukturiert reliefförmig verstanden werden.

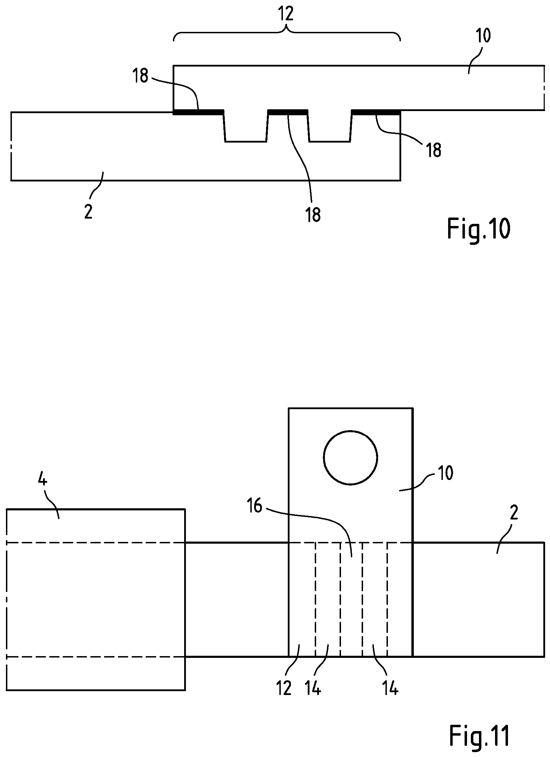

Fig. 10 zeigt den Beginn eines Schweißvorgangs. Ein Anschlussteil 10 wird auf ein Flachteil 12 im Bereich der Kontaktoberfläche 12 aufgelegt. Zu erkennen ist, dass die Berührflächen 17 kleiner sind, als die Kontaktfläche 12. Dies führt dazu, dass zu Beginn des Schweißvorgangs die Anpresskraft auf eine kleinere Fläche verteilt wird und somit ein erhöhter Anpressdruck zu einer verbesserten Plastifizierung führt.

In Fig. 10 verlaufen Flachteil 2 und Anschlussteil 10 mit ihren Längsachsen gleichförmig.

In der Fig. 11 ist gezeigt, dass das Anschlussteil 10 auch quer, insbesondere senkrecht zur Längsachse des Flachteils 2 verlaufen kann und in einem Überlappungsbereich die Kontaktoberfläche 12 liegt.

Durch die Struktur des Flachteils in der Kontaktoberfläche kommt es vor dem eigentlichen Verschweißen der Fügepartner zu einer Fixierung dieser relativ zueinander. Das Anschlussteil 10 wird von einer Sonotrode gegen die Kontaktoberfläche gedrückt. Dadurch kommt es bereits zu einer oberflächlichen Verzahnung zwischen der Oberfläche des Anschlussteils 10 und der Struktur des Flachteils 12.

Wird anschließend die Sonotrode in Schwingung versetzt, so ist die relative Position der Fügepartner durch diese Verzahnung bereits festgelegt. Ein Verrutschen erfolgt nicht. Dies ist insbesondere der Fall, wenn die Schwingungsrichtung parallel zum Verlauf der Berge und Täler ist.

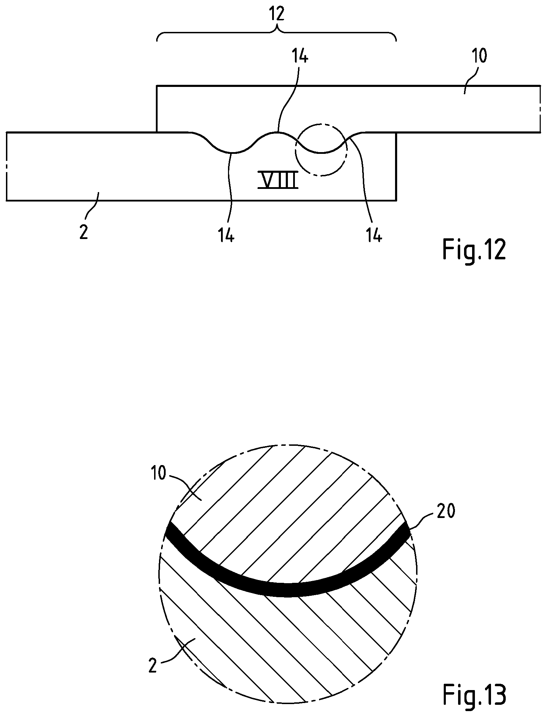

Fig. 12 zeigt Flachteil 2 und Anschlussteil 10 im verschweißten Zustand. Im Bereich der Kontaktoberfläche 12 ist das Anschlussteil 10 vollständig in die Nuten 14 eingedrungen und die Erhebung 16 ist vollständig in das Anschlussteil 10 eingedrungen. Es ergibt sich eine Schweißoberfläche, die sich über die gesamte Kontaktoberfläche erstreckt.

Wie in Fig. 13 gezeigt, ist der intermetallische Übergang durch eine Fügezone 21 gebildet, in der eine intermetallische Verbindung zwischen dem Werkstoff des Flachteils 2 und dem Werkstoff des Anschlussteils 10 gebildet ist. Die Tiefe der Fügezone 21 ist jedoch erheblich geringer, als die Tiefe einer Nut 14 bzw. der Abstand zwischen der Oberkante einer Erhebung 16 und dem Grund einer Vertiefung 14, so dass selbst nach dem Verschweißen die reliefförmige, strukturierte Oberfläche erkennbar ist.

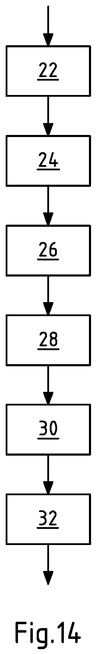

Fig. 14 zeigt den Ablauf eines gegenständlichen Verfahrens. Zunächst wird ein Flachteil bereitgestellt (22).

Anschließend wird in das Flachteil die reliefförmige, strukturierte Oberfläche, beispielsweise gemäß der Figuren 2-4, mittels Stanzen oder Fräsen eingebracht (24). Daraufhin wird ein Anschlussteil bereitgestellt (26).

Das Anschlussteil wird auf das Flachteil aufgelegt (28).

Danach wird mittels eines Schweißwerkzeugs das Anschlussteil gegen das Flachteil gepresst und in Schwingung versetzt (30). Die Schwingung ist insbesondere eine Ultraschallschwingung. Währen des Verschweißens schmilzt die Oberfläche von Flachteil und Anschlussteil im Bereich der Berührfläche auf und das Anschlussteil dringt nach und nach in die strukturierte, reliefförmige Oberfläche des Flachteils ein. Zum Ende des Schweißvorgangs (32) ist das Anschlussteil vollflächig mit dem Flachteil im Bereich der Kontaktoberfläche verschweißt. Die Schwingung verläuft dabei parallel zu der reliefförmigen Struktur. Die Struktur ist in Richtung der Längsachse des Flachteils periodisch. Die Struktur hat Berge und Täler, welche sich senkrecht zur Längsachse des Flachteils erstrecken. Die Schwingung erfolgt ebenfalls senkrecht zur Längsachse des Flachteils.

## Patentansprüche

1. Elektrische Verbindung zwischen einem Flachteil (2) und einem Anschlussteil (10) bei der

   - das Flachteil (2) und das Anschlussteil (10) in einem Überlappungsbereich übereinander angeordnet sind,
   - eine im Überlappungsbereich dem Anschlussteil zugewandte Kontaktoberfläche (12) des Flachteils (2) eine reliefförmige Struktur hat und
   - das Flachteil (2) mit dem Anschlussteil (10) über die strukturierte Kontaktoberfläche (12) reibverschweißt, insbesondere ultraschallverschweißt ist, wobei die Kontaktoberfläche (12) in einem Längsschnitt des Flachteils (2) vor und nach dem verschweißen strukturiert ist, **dadurch gekennzeichnet,**

- **dass** das Anschlussteil (10) vollständig in die relieffförmige Oberfläche des Flachteils (2) eingedrungen ist und sich eine vollflächige Verbindung zwischen dem Anschlussteil (10) und der Kontaktoberfläche (12) gebildet hat.

2. Elektrische Verbindung nach Anspruch 1,
**dadurch gekennzeichnet,**

- **dass** die Struktur regelmäßig periodisch ist.

3. Elektrische Verbindung nach einem der vorangehenden Ansprüche,
**dadurch gekennzeichnet,**

- **dass** die Struktur in Richtung einer Längsachse x der Kontaktoberfläche (12) nach einer Funktion

$$h(x) = h_0 \, f(x)$$

wobei h die Amplitude ist und f(x) eine trigonometrische Funktion ist, insbesondere $\sin(2\pi x)$ oder $\cos(2\pi x)$, gebildet ist.

4. Elektrische Verbindung nach einem der vorangehenden Ansprüche,
**dadurch gekennzeichnet,**

- **dass** in einem stirnseitigen Endbereich die Kontaktoberfläche (12) frei von der Struktur ist.

5. Elektrische Verbindung nach einem der vorangehenden Ansprüche,
**dadurch gekennzeichnet,**

- **dass** in einem stirnseitigen Endbereich die Kontaktoberfläche (12) parallel zu einer breiten Oberfläche des Flachteils (2) vor der Kontaktoberfläche (12) verläuft.

6. Elektrische Verbindung nach einem der vorangehenden Ansprüche,
**dadurch gekennzeichnet,**

- **dass** das Flachteil (2) im Bereich der Kontaktoberfläche (12) eine geringere Höhenerstreckung hat als in einem Bereich vor der Kontaktoberfläche (12).

7. Elektrische Verbindung nach einem der vorangehenden Ansprüche,
**dadurch gekennzeichnet,**

- **dass** das Flachteil (2) im Bereich der Kontaktoberfläche (12) eine geringere Breitenerstreckung hat als in einem Bereich vor der Kontaktoberfläche (12).

8. Elektrische Verbindung nach einem der vorangehenden Ansprüche,
**dadurch gekennzeichnet,**

- **dass** das Anschlussteil (10) ein Flachleiter ist, dass das Anschlussteil (10) im Überlappungsbereich das Flachteil (2) in Breitenerstreckung überragt und dass das Anschlussteil (10) um zumindest eine Längskante des Flachteils (2) im Überlappungsbereich gebogen ist.

9. Elektrische Verbindung nach einem der vorangehenden Ansprüche,
**dadurch gekennzeichnet,**

- **dass** das Anschlussteil (10) das Flachteil (2) im Überlappungsbereich U-förmig umgreift.

10. Elektrische Verbindung nach einem der vorangehenden Ansprüche,
**dadurch gekennzeichnet,**

- **dass** das Flachteil (2) im Bereich der Kontaktoberfläche (12) metallisch beschichtet ist.

11. Elektrische Verbindung nach einem der vorangehenden Ansprüche,
**dadurch gekennzeichnet,**

- **dass** das Flachteil (2) an seiner in Längsrichtung der Kontaktoberfläche (12) gegenüberliegenden Seite eine Anschlusskonsole aufweist.

12. Elektrische Verbindung nach einem der vorangehenden Ansprüche,
**dadurch gekennzeichnet,**

- **dass** die Anschlusskonsole als Anschlussbolzen oder Anschlussfahne oder Anschlussöffnung, insbesondere Anschlussbohrung gebildet ist.

13. Elektrische Verbindung nach einem der vorangehenden Ansprüche,
**dadurch gekennzeichnet,**

- **dass** die Anschlusskonsole metallisch beschichtet ist, insbesondere dass das Flachteil um die Anschlussöffnung herum metallisch beschichtet ist.

**14.** Elektrische Verbindung nach einem der vorangehenden Ansprüche,
**dadurch gekennzeichnet,**

- **dass** das Flachteil (2) ein S-förmiges Längsprofil aufweist.

**15.** Elektrische Verbindung nach Anspruch 1,
**dadurch gekennzeichnet,**

- **dass** das Flachteil (2) aus Aluminiumwerkstoff gebildet ist und das Anschlussteil (10) aus Kupferwerkstoff gebildet ist oder dass das Anschlussteil (10) aus Aluminiumwerkstoff gebildet ist und das Flachteil (2) aus Kupferwerkstoff gebildet ist.

**16.** Elektrische Verbindung nach einem der vorhergehenden Ansprüche,
**dadurch gekennzeichnet,**

- **dass** die reliefförmige Kontaktoberfläche (12) in einem Längsschnitt oder einem Querschnitt durch das Flachteil (2) wellenförmig oder stufig ist.

**17.** Elektrische Verbindung nach einem der vorhergehenden Ansprüche,
**dadurch gekennzeichnet,**

- **dass** sich die strukturierte Oberfläche in einer Draufsicht wellenförmig oder stufig verläuft.

**18.** Elektrische Verbindung nach einem der vorhergehenden Ansprüche,
**dadurch gekennzeichnet,**

- **dass** die strukturierte Oberfläche durch Vertiefungen in der Oberfläche des Flachteils (2) gebildet ist.

**19.** Elektrische Verbindung nach einem der vorhergehenden Ansprüche,
**dadurch gekennzeichnet,**

- **dass** die Vertiefungen durch Nuten in der Kontaktoberfläche (12) gebildet sind

**20.** Verfahren zur Herstellung einer elektrischen Verbindung zwischen einem Flachteil (2) und einem Anschlussteil (10) umfassend:

- Bereitstellen eines Flachteils (2),
- Einbringen einer strukturierten, reliefförmigen Struktur in das Flachteil (2) in eine Kontaktoberfläche (12) des Flachteils (2),
- Bereitstellen eines Anschlussteils (10),
- Auflegen des Anschlussteils (10) auf das Flachteil (2) im Bereich der reliefförmigen Struktur,
- Anpressen des Anschlussteils (10) auf das Flachteil (2) mit einem Schweißwerkzeug und Reibverschweißen, insbesondere Ultraschallverschweißen zwischen Anschlussteil (10) und Flachteil (2) wobei
- das Schweißwerkzeug parallel zu der reliefförmigen Struktur schwingt, so dass das Anschlussteil (10) vollständig in die relieffförmige Oberfläche des Flachteils (2) eingedrungen ist und eine vollflächige Verbindung zwischen dem Anschlussteil (10) und der Kontaktoberfläche (12) gebildet wird.

**21.** Verfahren nach Anspruch 20,
**dadurch gekennzeichnet,**

- **dass** die Struktur aus sich in Querrichtung des Flachteils (2) erstreckenden Bergen und Tälern gebildet ist und dass die Schweißwerkzeug parallel zu den Bergen und Tälern schwingt.

**22.** Verfahren nach Anspruch 20 oder 21,
**dadurch gekennzeichnet,**

- **dass** Anschlussteil (10) und/oder das Flachteil (2) beim Verschweißen zunächst im Bereich einer Erhebung der reliefförmigen Oberfläche durch die eingebbrachte Schwingung plastifizieren und mit zunehmender Schweißdauer das Anschlussteil (10) und/oder das Flachteil (2) bis hin zu einem Boden einer Vertiefung der reliefförmigen Oberfläche plastifizieren.

**23.** Verfahren nach einem der Ansprüche 20 bis 22,
**dadurch gekennzeichnet,**

- **dass** vor dem Verschweißen des Anschlussteil (10) auf die reliefförmige Struktur gedrückt wird, dass dadurch eine relative Position der Längsachsen von Anschlussteil (10) und Flachteil (2) zueinander fixiert ist und dass anschließend Flachteil (2) und Anschlussteil (10) miteinander verschweißt werden.

**Claims**

**1.** Electrical connection between a flat part (2) and a connecting part (10) wherein

- the flat part (2) and the connecting part (10) are arranged one above the other in an overlap area,
- a contact surface (12) of the flat part (2) facing the connecting part (10) in the overlap area has a relief-like structure and

- the flat part (2) is friction-welded, in particular ultrasonically welded, to the connecting part (10) via the structured contact surface, wherein the contact surface (12) is structured in a longitudinal section of the flat part (2) before and after welding,
**characterized in that**
- the connecting part (10) has completely penetrated into the relief-like surface of the flat part (2) and a full-surface connection between the connecting part (10) and the contact surface (12) has formed.

2. Electrical connection according to claim 1,
**characterized in that**

     - the structure is regularly periodic.

3. Electrical connection according to one of the preceding claims,
**characterized in that**

     - the structure in the direction of a longitudinal axis x of the contact surface (12) is formed according to a function

$$h(x) = h_0\, f(x)$$

where h is the amplitude and f(x) is a trigonometric function, especially $\sin(2\pi x)$ or $\cos(2\pi x)$.

4. Electrical connection according to one of the preceding claims,
**characterized in that**

     - the contact surface (12) is free of the structure in one end face area.

5. Electrical connection according to one of the preceding claims,
**characterized in that**

     - in a front end area the contact surface (12) is parallel to a wide surface of the flat part (2) in front of the contact surface (12).

6. Electrical connection according to one of the preceding claims,
**characterized in that**

     - the flat part (2) has a lower height extent in the area of the contact surface (12) than in an area in front of the contact surface (12).

7. Electrical connection according to one of the preceding claims,
**characterized in that**

     - the flat part (2) has a smaller width extent in the area of the contact surface (12) than in an area in front of the contact surface (12).

8. Electrical connection according to one of the preceding claims,
**characterized in that**

     - the connecting part (2) is a flat conductor, **in that** the connecting part (10) protrudes beyond the flat part (2) in the width extent in the overlap region and **in that** the connecting part (10) is bent around at least one longitudinal edge of the flat part (2) in the overlap region.

9. Electrical connection according to one of the preceding claims,
**characterized in that**

     - the connecting part (10) wraps around the flat part (2) in a U-shape in the overlap area.

10. Electrical connection according to one of the preceding claims,
**characterized in that**

     - the flat part (2) is metallically coated in the area of the contact surface (12).

11. Electrical connection according to one of the preceding claims,
**characterized in that**

     - the flat part (2) has a terminal console on its side opposite the contact surface (12) in the longitudinal direction.

12. Electrical connection according to one of the preceding claims,
**characterized in that**

     - the terminal console is formed as a connecting bolt or connecting lug or connection opening, in particular a connecting bore.

13. Electrical connection according to one of the preceding claims,
**characterized in that**

     - the terminal console is metallically coated, in particular that the flat part is metallically coated around the connection opening.

14. Electrical connection according to one of the preceding claims,
**characterized in that**

     - the flat part (2) has an S-shaped longitudinal profile

15. Electrical connection according to claim 1, **characterized in that**

- the flat part (2) is formed from aluminium material and the connecting part (10) is formed from copper material or **in that** the connecting part (10) is formed from aluminium material and the flat part (2) is formed from copper material.

16. Electrical connection according to one of the preceding claims, **characterized in that**

- the relief-like contact surface (12) is undulated or stepped in a longitudinal section or a cross-section through the flat part (2).

17. Electrical connection according to one of the preceding claims, **characterized in that**

- the structured surface is undulated or stepped in a top view.

18. Electrical connection according to one of the preceding claims, **characterized in that**

- the structured surface is formed by recesses in the surface of the flat part (2).

19. Electrical connection according to one of the preceding claims, **characterized in that**

- the recesses are formed by grooves in the contact surface (12).

20. Method of establishing an electrical connection between a flat part (2) and a connecting part (10):

- providing a flat part (2),
- forming a structured, relief-like structure into the flat part (2) in a contact surface (12) of the flat part (2),
- providing a connection part (10),
- placing the connecting part (10) on the flat part (2) in the area of the relief-like structure,
- pressing the connecting part (10) onto the flat part (2) with a welding tool and friction welding, in particular ultrasonic welding between connecting part (10) and flat part (2), wherein
- the welding tool oscillates parallel to the relief-like structure, so that the connecting part (10) has completely penetrated into the relief-like surface of the flat part (2) and a full-surface connection between the connecting part (10) and the contact surface (12) is formed.

21. Method according to claim 20, **characterized in that**

- the structure is formed by hills and valleys extending in the transverse direction of the flat part (2) and **in that** the welding tool oscillates parallel to the hills and valleys.

22. Method according to claim 20 or 21, **characterized in that**

- the connecting part (10) and/or the flat part (2) during welding initially plasticize in the region of a protrusion of the relief-like surface as a result of the oscillation introduced and, as the welding duration increases, plasticize the connecting part (10) and/or the flat part (2) down to a bottom of a recess in the relief-like surface.

23. Method according to one of the claims 20 to 22, **characterized in that**

- before welding the connecting part (10) is pressed onto the relief-like structure, **in that** this fixes a relative position of the longitudinal axes of the connecting part (10) and flat part (2) with respect to one another, and **in that** the flat part (2) and connecting part (10) are then welded together.

**Revendications**

1. Connexion électrique entre une pièce plate (2) et une pièce de raccordement (10) pour laquelle

- la pièce plate (2) et la pièce de raccordement (10) sont superposées dans une zone de chevauchement,
- une surface de contact (12) de la pièce plate (2) tournée vers la pièce de raccordement dans la zone de chevauchement a une structure en relief et
- la pièce plate (2) est reliée à la pièce de raccordement (10) par la surface de contact structurée (12) de la pièce plate (2), en particulier par soudage par ultrasons,
- la surface de contact (12) étant structurée dans une coupe longitudinale de la pièce plate (2) avant et après le soudage,
**caractérisée**
- **en ce que** la pièce de raccordement (10) a pénétré complètement dans la surface en relief de la pièce plate (2) et qu'une liaison de surface pleine s'est formée entre la pièce de raccordement (10) et la surface de contact (12).

2. Connexion électrique selon la revendication 1, **caractérisée**

   - **en ce que** la structure est régulièrement périodique.

3. Connexion électrique selon l'une des revendications précédentes, **caractérisée**

   - **en ce que** la structure est orientée selon un axe longitudinal x de la surface de contact (12) selon une fonction

$$h(x) = h_0\, f(x)$$

   où h est l'amplitude et f(x) est une fonction trigonométrique, notamment $\sin(2\pi x)$ ou $\cos(2\pi x)$.

4. Connexion électrique selon l'une des revendications précédentes, **caractérisée**

   - **en ce que**, dans une zone d'extrémité frontale, la surface de contact (12) est exempte de la structure.

5. Connexion électrique selon l'une des revendications précédentes, **caractérisée**

   - **en ce que** dans une zone d'extrémité frontale, la surface de contact (12) s'étend parallèlement à une surface large de la partie plate (2) devant la surface de contact (12).

6. Connexion électrique selon l'une des revendications précédentes, **caractérisée**

   - **en ce que** la pièce plate (2) a une épaisseur inférieure dans la zone de la surface de contact (12).

7. Connexion électrique selon l'une des revendications précédentes, **caractérisée**

   - **en ce que** la partie plate (2) a une largeur inférieure dans la zone de la surface de contact (12).

8. Connexion électrique selon l'une des revendications précédentes, **caractérisée**

   - **en ce que** la pièce de raccordement (10) est un conducteur plat, que la pièce de raccordement (10) dépasse en largeur la pièce plate (2) dans la zone de chevauchement et que la pièce de raccordement (10) est incurvée autour d'au moins un bord longitudinal de la pièce plate (2) dans la zone de chevauchement.

9. Connexion électrique selon l'une des revendications précédentes, **caractérisée**

   - **en ce que** la pièce de raccordement (10) entoure en forme de U la pièce plate (2) dans la zone de chevauchement.

10. Connexion électrique selon l'une des revendications précédentes, **caractérisée**

    - **en ce que** la pièce plate (2) est recouverte d'un revêtement métallique dans la zone de la surface de contact (12).

11. Connexion électrique selon l'une des revendications précédentes, **caractérisée**

    - **en ce que** la pièce plate (2) comporte, sur son côté opposé, dans la direction longitudinale, à la surface de contact (12), une console de raccordement.

12. Connexion électrique selon l'une des revendications précédentes, **caractérisée**

    - **en ce que** la console de raccordement est formée comme un boulon de raccordement ou une languette de raccordement ou une ouverture de raccordement, en particulier un trou de raccordement.

13. Connexion électrique selon l'une des revendications précédentes, **caractérisée**

    - **en ce que** la console de raccordement est revêtue d'un métal, en particulier que la pièce plate est revêtue d'un métal autour de l'ouverture de raccordement.

14. Connexion électrique selon l'une des revendications précédentes, **caractérisée**

    - **en ce que** la pièce plate (2) présente un profil longitudinal en forme de S.

**15.** Connexion électrique selon la revendication 1, **caractérisée**

- **en ce que** la pièce plate (2) est formée en matériau d'aluminium et la pièce de raccordement (10) est formée en matériau de cuivre ou
- **en ce que** la pièce de raccordement (10) est formée en matériau d'aluminium et la pièce plate (2) est formée en matériau de cuivre.

**16.** Connexion électrique selon l'une des revendications précédentes, **caractérisée**

- **en ce que** la surface de contact en relief (12) est ondulée ou étagée en coupe longitudinale ou en coupe transversale de la pièce plate (2).

**17.** Connexion électrique selon l'une des revendications précédentes, **caractérisée**

- **en ce que** la surface structurée est ondulée ou étagée dans une vue en plan.

**18.** Connexion électrique selon l'une des revendications précédentes, **caractérisée**

- **en ce que** la surface structurée est formée par des creux dans la surface de la pièce plate (2).

**19.** Connexion électrique selon l'une des revendications précédentes, **caractérisée**

- **en ce que** les creux sont formés par des rainures dans la surface de contact (12).

**20.** Procédé de fabrication d'une connexion électrique entre une pièce de contact (2) et une pièce de raccordement (10) comprenant :

- mise à disposition d'une pièce plate (2),
- introduction d'une structure structurée, en relief dans une surface de contact (12) de la pièce plate (2),
- mise à disposition d'une pièce de raccordement (10),
- pose de la pièce de raccordement (10) sur la pièce plate (2) dans la zone de la structure en relief,
- pressage la pièce de raccordement (10) sur la pièce plate (2) avec un outil de soudage et soudage par friction, en particulier soudage par ultrasons entre la pièce de raccordement (10) et la pièce plate (2),
- l'outil de soudage oscillant parallèlement à la structure en relief, de sorte que la pièce de raccordement (10) a complètement pénétré dans la surface en relief de la pièce plate (2) et qu'une liaison de surface pleine est formée entre la pièce de raccordement (10) et la surface de contact (12).

**21.** Procédé selon la revendication 20, **caractérisé**

- **en ce que** la structure est formée de crêtes et de vallées s'étendant dans la direction transversale de la pièce plate (2) et
- **en ce que** l'outil de soudage oscille parallèlement aux crêtes et aux vallées.

**22.** Procédé selon la revendication 20 ou 21, **caractérisé**

- **en ce que** la pièce de raccordement (10) et/ou la pièce plate (2) se plastifient lors du soudage d'abord dans la zone d'une éminence de la surface en relief par l'oscillation introduite et que, avec une durée de soudage croissante, la pièce de raccordement (10) et/ou la pièce plate (2) se plastifient jusqu'à un fond d'un creux de la surface en relief.

**23.** Procédé selon l'une des revendications 20 à 22, **caractérisé**

- **en ce qu'**avant le soudage de la pièce de raccordement (10), on appuie sur la structure en relief,
- **en ce qu'**on fixe ainsi une position relative des axes longitudinaux de la pièce de raccordement (10) et de la pièce plate (2) l'un par rapport à l'autre, et
- **en ce qu'**ensuite la pièce plate (2) et la pièce de raccordement (10) sont soudés ensemble.

Fig.1a

Fig.1b

Fig.1c

Fig.2a

Fig.2b

Fig.3

Fig.4

Fig.5

Fig.6a

Fig.6b

Fig.6c

Fig.7a

Fig.7b

Fig.7c

Fig.8a

Fig.8b

Fig.9a

Fig.9b

Fig.9c

Fig.9d

Fig.10

Fig.11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016110628 A1